# EUROPEAN PATENT APPLICATION

(11) **EP 4 613 909 A1**
(43) Date of publication of application: **10.09.2025**
(21) Application number: 23912181.7
(22) Date of filing: 26.12.2023
(51) Int. Cl.: C23C 2/06, C21D 1/26, C21D 1/76, C22C 18/00, C22C 18/04, C23C 2/02, C23C 2/26

(54) **PLATED STEEL SHEET**

(30) Priority: 26.12.2022 JP 2022208666
(71) Applicant: NIPPON STEEL CORPORATION, Chiyoda-ku Tokyo 100-8071 (JP)
(72) Inventor: MITSUNOBU, Takuya, Tokyo 100-8071 (JP); URANAKA, Masaaki, Tokyo 100-8071 (JP); MATSUBA, Masahiro, Tokyo 100-8071 (JP); NISHIKADO, Minae, Tokyo 100-8071 (JP)
(74) Representative: Vossius & Partner Patentanwälte Rechtsanwälte mbB
(86) International application number: PCT/JP2023/046754
(87) International publication number: WO 2024/143403

(57) **Abstract**

A plated steel sheet according to the present invention includes on at least a part of a surface of a steel sheet, a plating layer having a chemical composition containing, by mass%, Al: 0.50 to 4.50 or less, Mg: 0.50 to less than 3.00%, Fe: 0.01 to 15.00%, and selectively containing one or more selected from the group consisting of following element group A, element group B, element group C, element group D, element group E, element group F, and element group G with a balance composed of 5.00 mass% or more of Zn and impurities, wherein in a measured result obtained by measuring the plating layer by an X-ray diffraction method, a peak intensity ratio I₁₀₀/I₀₀₂ of an intensity I₁₀₀ of a peak corresponding to a (100) plane of a MgZn₂ phase to an intensity I₀₀₂ of a peak corresponding to a (002) plane is 2.50 or more.

## Description

### [Technical Field]

The present invention relates to a plated steel sheet.

### [Background Art]

A galvanized steel sheet is a widely used material in the fields of construction, automobiles, and the like from the viewpoint of improving the corrosion resistance of structural members. In this case, a method of manufacturing various structural members by welding the galvanized steel sheet galvanized in advance, by arc welding, laser welding, or the like is used.

Here, there are problems unique to the case of manufacturing the structural member by welding galvanized steel sheets. They are liquid metal embrittlement (LME) cracking caused by hot-dip plating at heat affected zones of a weld metal and a base material and degradation in corrosion resistance around a welded portion (welding heat affected zone) due to blowhole formation caused by Zn combustion during welding.

To solve the above problems of the LME and the blowhole formation, various proposals have been conventionally made. For example, Patent Document 1 below proposes a plated steel material which includes a steel sheet and a plating layer located on a surface of the steel sheet and including a Zn-Al-Mg alloy layer, wherein in a cross-section of the Zn-Al-Mg alloy layer, an area fraction of a MnZn₂ phase is 45 to 75%, a total area fraction of the MgZn₂ phase and an Al phase is 70% or more, and an area fraction of a Zn-Al-MgZn₂ ternary eutectic structure is 0 to 5%, the plating layer having a predetermined chemical composition.

### [Prior Art Document]

### [Patent Document]

Patent Document 1: International Publication Pamphlet No. WO 2018/139620

### [Disclosure of the Invention]

### [Problems to Be Solved by the Invention]

Here, the problems of the LME and blowhole formation can be solved by using the plated steel material proposed in Patent Document 1 above. However, as a result of intensive studies by the present inventors, there is still room for improvement in the technique proposed in Patent Document 1 above, and further improvement is expected by employing a technical approach different from Patent Document 1 above to the problem related to the LME and the problem related to the paint film blistering after welding.

Hence, the present invention has been made in view of the above problems, and an object of the present invention is to provide a plated steel sheet that can further suppress the occurrence of the LME during welding and the paint film blistering after welding.

### [Means for Solving the Problems]

As a result of the intensive studies about the paint film blistering during welding to solve the above problems, the present inventors have found that it is possible to suppress the paint film blistering during welding while suppressing the occurrence of the LME during welding by controlling the orientation of a specific metal structure in a surface structure of the plating layer, and have completed the present invention.

The gist of the present invention completed based on the findings is as follows.
(1) A plated steel sheet including
   on at least a part of a surface of a steel sheet, a plating layer having a chemical composition containing, by mass%,
   Al: 0.50 to 4.50 or less,
   Mg: 0.50 to less than 3.00%,
   Fe: 0.01 to 15.00%, and
   selectively containing one or more selected from the group consisting of following element group A, element group B, element group C, element group D, element group E, element group F, and element group G with a balance composed of 5.0000 mass% or more of Zn and impurities, wherein
   in a measured result obtained by measuring the plating layer by an X-ray diffraction method, a peak intensity ratio I₁₀₀/I₀₀₂ of an intensity I₁₀₀ of a peak corresponding to a (100) plane of a MgZn₂ phase to an intensity I₀₀₂ of a peak corresponding to a (002) plane is 2.50 or more.

   [Element group A]: one or two selected from the group consisting of Si: more than 0% and 2.00% or less and Ca: more than 0% and 2.00% or less [Element group B]: one or more selected from the group consisting of Sb: more than 0% and 0.5000% or less, Pb: more than 0% and 0.5000% or less, and Sr: more than 0% and 0.5000% or less
   [Element group C]: one or more selected from the group consisting of Co: more than 0% and 1.0000% or less, V: more than 0% and 1.0000% or less, Cu: more than 0% and 1.0000% or less, Ti: more than 0% and 1.0000% or less, Cr: more than 0% and 1.0000% or less, Nb: more than 0% and 1.0000% or less, Ni: more than 0% and 1.0000% or less, Mn: more than 0% and 1.0000% or less, and Mo: more than 0% and 1.0000% or less
   [Element group D]: one or more selected from the group consisting of In: more than 0% and 1.0000% or less, Bi: more than 0% and 1.0000% or less, and Sn: more than 0% and 1.0000% or less
   [Element group E]: one or more selected from the group consisting of Zr: more than 0% and 1.0000% or less, Ag: more than 0% and 1.0000% or less, and Li: more than 0% and 1.0000% or less
   [Element group F]: one or more selected from the group consisting of La: more than 0% and 0.5000% or less, Ce: more than 0% and 0.5000% or less, and Y: more than 0% and 0.5000% or less
   [Element group G]: B: more than 0% and 0.5000% or less
(2) The plated steel sheet according to the (1) having a chemical composition containing the element group A.
(3) The plated steel sheet according to the (1) having a chemical composition containing the element group B.
(4) The plated steel sheet according to the (1) having a chemical composition containing the element group C.
(5) The plated steel sheet according to the (1) having a chemical composition containing the element group D.
(6) The plated steel sheet according to the (1) having a chemical composition containing the element group E.
(7) The plated steel sheet according to the (1) having a chemical composition containing the element group F.
(8) The plated steel sheet according to the (1) having a chemical composition containing the element group G.
(9) The plated steel sheet according to any one of the (1) to (8), wherein the steel sheet has a tensile strength of 780 MPa class or higher.
(10) The plated steel sheet according to any one of the (1) to (8), wherein the peak intensity ratio I₁₀₀/I₀₀₂ is 5.00 or more.
(11) The plated steel sheet according to claim (9), wherein
   the peak intensity ratio I₁₀₀/I₀₀₂ is 5.00 or more.
(12) The plated steel sheet according to the (10), wherein
   the peak intensity ratio I₁₀₀/I₀₀₂ is 10.00 or more.
(13) The plated steel sheet according to the (11), wherein
   the peak intensity ratio I₁₀₀/I₀₀₂ is 10.00 or more.
(14) The plated steel sheet according to any one of the (1) to (8), wherein
   in a measured result obtained by measurement by glow discharge spectrometry in a depth direction of the plated steel sheet, a depth at which a C concentration is 0.05% or less by mass% is 10 µm or more.
(15) The plated steel sheet according to the (9), wherein
   in a measured result obtained by measurement by glow discharge spectrometry in a depth direction of the plated steel sheet, a depth at which a C concentration is 0.05% or less by mass% is 10 µm or more.
(16) The plated steel sheet according to the (10), wherein
   in a measured result obtained by measurement by glow discharge spectrometry in a depth direction of the plated steel sheet, a depth at which a C concentration is 0.05% or less by mass% is 10 µm or more.
(17) The plated steel sheet according to the (11), wherein
   in a measured result obtained by measurement by glow discharge spectrometry in a depth direction of the plated steel sheet, a depth at which a C concentration is 0.05% or less by mass% is 10 µm or more.
(18) The plated steel sheet according to the (12), wherein
   in a measured result obtained by measurement by glow discharge spectrometry in a depth direction of the plated steel sheet, a depth at which a C concentration is 0.05% or less by mass% is 10 µm or more.
(19) The plated steel sheet according to the (13), wherein
   in a measured result obtained by measurement by glow discharge spectrometry in a depth direction of the plated steel sheet, a depth at which a C concentration is 0.05% or less by mass% is 10 µm or more.

### [Effect of the Invention]

As explained above, according to the present invention, it is possible to provide a plated steel sheet that can further suppress the occurrence of the LME during welding and the paint film blistering after welding.

### [Brief Description of the Drawings]

[FIG. 1A] FIG. 1A is an explanatory view schematically illustrating a configuration of a plated steel sheet according to an embodiment of the present invention.
[FIG. 1B] FIG. 1B is an explanatory view schematically illustrating the configuration of the plated steel sheet according to this embodiment.
[FIG. 2] FIG. 2 is a schematic view for explaining a MgZn₂ phase in the plating layer of the plated steel sheet according to this embodiment.
[FIG. 3] FIG. 3 is an explanatory diagram for explaining the intensity of a peak in an XRD measured result.

### [Embodiments for Carrying out the Invention]

Preferred embodiments of the present invention will be explained in detail below with reference to the accompanying drawings. Note that, in the description and drawings, the same reference signs denote components having substantially the same functional configurations to omit redundant explanation thereof.

### (Regarding a plated steel sheet)

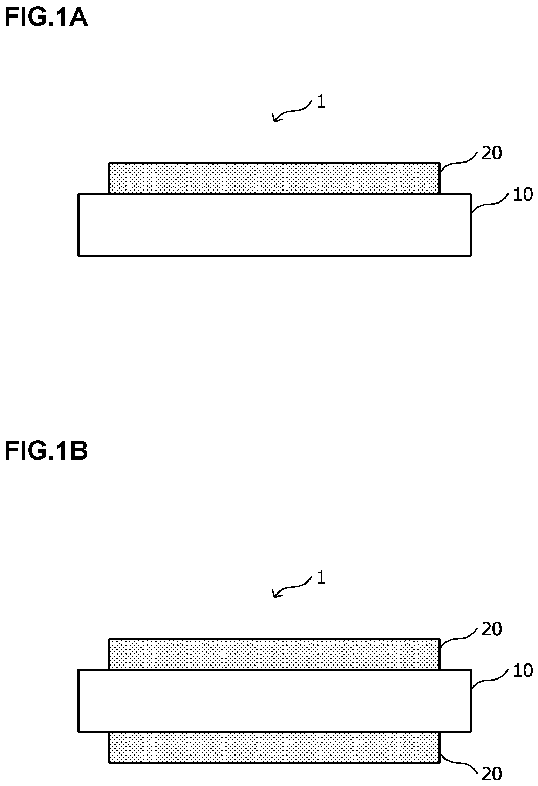

First, an overall configuration of a plated steel sheet according to an embodiment of the present invention will be explained with reference to FIG. 1A and FIG. 1B. FIG. 1A and FIG. 1B are explanatory views schematically illustrating an example of the plated steel sheet according to this embodiment.

As schematically illustrated in FIG. 1A, a plated steel sheet 1 according to this embodiment has a steel sheet 10 being a base material, and a plating layer 20 located on at least a part of a surface of the steel sheet 10. Further, the plating layer 20 may be present on both surfaces of the steel sheet 10 as schematically illustrated in FIG. 1B instead of being present only on one surface of the steel sheet 10 as illustrated in FIG. 1A.

### <Regarding the steel sheet 10>

The dimension, component, structure, and mechanical property of the steel sheet 10 used as the base material of the plated steel sheet 1 according to this embodiment are not particularly limited. For example, various types of steel sheets can be used according to the mechanical strength (for example, tensile strength) or the like required for the plated steel sheet 1. Examples of the steel sheet 10 include various types of Al-killed steel, ultralow carbon steel containing Ti, Nb, and the like, high-strength steel further containing strengthening elements such as P, Si, and Mn in the ultralow carbon steel, various steel sheets containing other various components (Cr, N, Cu, B, Ni, Mg, Ca, V, Co, Zn, As, Y, Zr, Mo, Sn, Sb, Ta, W, Pb, Bi, REM, and the like), and so on.

Besides, the thickness of the steel sheet 10 is not particularly limited and only needs to be set appropriately according to the mechanical strength and the like required for the plated steel sheet 1.

According to another aspect, a steel sheet having a tensile strength of 780 MPa class or higher is used as the steel sheet 10. The steel sheet 10 is preferable as a base material steel sheet forming the plating layer 20 according to this embodiment. More preferably, a steel sheet having a tensile strength of 980 MPa class or higher is used as the steel sheet 10.

### <Regarding the plating layer 20>

The plating layer 20 is provided on the surface of the steel sheet 10 as schematically illustrated in FIG. 1A and FIG. 1B, and is more preferably provided over the entire surface of the steel sheet 10. In the following, a chemical composition of the plating layer 20 will be first explained in detail.

### ◊ Regarding the chemical composition of the plating layer 20

The chemical composition of the plating layer 20 according to this embodiment has, in an aspect, a chemical composition containing, by mass%, Al: 0.50 to 4.50% or less, Mg: 0.50 to less than 3.00%, and Fe: 0.01 to 15.00, with the balance composed of 5.0000 mass% or more of Zn and impurities. In other words, in the chemical composition of the plating layer 20 according to this embodiment, the contents of Al, Mg, and Fe are within the above ranges and the total of these contents is less than 95.0000 mass%, with the balance composed of 5.0000 mass% or more of Zn and impurities.

Further, the chemical composition of the plating layer 20 according to this embodiment has, in another aspect, a chemical composition containing, by mass%, Al: 0.50 to 4.50% or less, Mg: 0.50 to less than 3.00%, Fe: 0.01 to 15.00%, and one or more selected from the group consisting of the following element group A, element group B, element group C, element group D, element group E, element group F, and element group G, with the balance composed of 5.0000 mass% or more of Zn and impurities. In other words, in the chemical composition of the plating layer 20 according to this embodiment, the contents of Al, Mg, and Fe are within the above ranges and the total of the contents of these Al, Mg, Fe, and element group A to element group G is less than 95.0000 mass%, with the balance composed of 5.0000 mass% or more of Zn and impurities.

[Element group A]: one or two selected from the group consisting of more than 0% Si: 2.00 or less and Ca: more than 0% and 2.00% or less
[Element group B]: one or more selected from the group consisting of Sb: more than 0% and 0.5000% or less, Pb: more than 0% and 0.5000% or less, and Sr: more than 0% and 0.5000% or less
[Element group C]: one or more selected from the group consisting of Cu: more than 0% and 1.0000% or less, Ti: more than 0% and 1.0000% or less, Cr: more than 0% and 1.0000% or less, Nb: more than 0% and 1.0000% or less, Ni: more than 0% and 1.0000% or less, Mn: more than 0% and 1.0000% or less, and Mo: more than 0% and 1.0000% or less
[Element group D]: one or more selected from the group consisting of In: more than 0% and 1.0000% or less, Bi: more than 0% and 1.0000% or less, and Sn: more than 0% and 1.0000% or less
[Element group E]: one or more selected from the group consisting of Zr: more than 0% and 1.0000% or less, Ag: more than 0% and 1.0000% or less, and Li: more than 0% and 1.0000% or less
[Element group F]: one or more selected from the group consisting of La: more than 0% and 0.5000% or less, Ce: more than 0% and 0.5000% or less, and Y: more than 0% and 0.5000% or less
[Element group G]: B: more than 0% and 0.5000% or less

As explained above, the plating layer 20 according to this embodiment is a plating layer having a chemical composition containing, by mass%, Al: 0.50 to 4.50% or less, Mg: 0.50 to less than 3.00%, Fe: 0.01 to 15.00%, and selectively containing one or more selected from the group consisting of the following element group A, element group B, element group C, element group D, element group E, element group F, and element group G, with the balance composed of 5.0000 mass% or more of Zn and impurities.

### [Al: 0.50 to 4.50 mass% or less]

Al is an element necessary to constitute a main metal structure (Zn-Al-Mg-based metal structure) of the plating layer 20 according to this embodiment, and is contained in a predetermined content or more to ensure corrosion resistance of a region to be a welding heat affected zone and corrosion resistance of a region to be a non-welded portion, as a plated steel sheet. If an Al content in the plating layer 20 is less than 0.50 mass%, the above corrosion resistance of the regions to be the welding heat affected zone and the non-welded portion cannot be ensured. Therefore, in the plating layer 20 according to this embodiment, the Al content is 0.50 mass% or more. The Al content is preferably 1.00 mass% or more, and more preferably 1.50 mass% or more. The Al content falling within the above range can ensure the corrosion resistance of the plated steel sheet 1.

On the other hand, if the Al content in the plating layer 20 exceeds 4.50 mass%, the formation of a Zn-Fe alloy phase is inhibited during welding and a liquid phase Zn-Mg thereby comes into contact with base steel, so that the LME cannot be sufficiently suppressed. Further, an α primary crystal crystallizes out in the plating layer at a non-heat affected portion during welding to inhibit a columnar orientation of a later-explained MgZn₂ phase, so that the paint film blistering after welding cannot be sufficiently suppressed. Therefore, in the plating layer 20 according to this embodiment, the Al content is 4.50 mass% or less. The Al content is preferably 4.00 mass% or less, and more preferably 3.00 mass% or less.

### [Mg: 0.50 to less than 3.00 mass%]

Mg is an element necessary to constitute the main metal structure (Zn-Al-Mg-based metal structure) of the plating layer 20 according to this embodiment, and is an element particularly necessary to form the later-explained MgZn₂ phase. Specifically, Mg is contained in a predetermined content or more to ensure the corrosion resistance of the region to be the welding heat affected zone and the corrosion resistance of the region to be the non-welded portion, as the plated steel sheet. Therefore, in the plating layer 20 according to this embodiment, an Mg content is 0.50 mass% or more. The Mg content is preferably 1.00 mass% or more, and more preferably 1.50 mass% or more. If Mg in the plating layer 20 is less than 0.50 mass%, the corrosion resistance of the region to be the non-welded portion may be insufficient and the columnar orientation of the later-explained MgZn₂ phase may be insufficient. The Mg content falling within the above range makes it possible to ensure the corrosion resistance of the plated steel sheet 1 and form the later-explained MgZn₂ phase.

On the other hand, if the Mg content in the plating layer 20 is 3.00 mass% or more, the alloying reaction between Zn in the plating layer and the base steel during welding is inhibited, and the liquid phase Zn-Mg comes into contact with base steel, so that the LME cannot be sufficiently suppressed. Further, nucleation sites for the MgZn₂ phase excessively increase in the plating layer, so that the orientation control of the MgZn₂ phase becomes difficult. Therefore, in the plating layer 20 according to this embodiment, the Mg content is less than 3.00 mass%. The Mg content is preferably 2.50 mass% or less, and more preferably 2.00 mass% or less. The Mg content falling within the above range makes it possible to sufficiently suppress the LME during welding of the plated steel sheet 1 and form the later-explained MgZn₂ phase.

### [Fe: 0.01 to 15.00 mass%]

Elements constituting the steel sheet 10, which is the base material, may be sometimes mixed into the plating layer 20. Especially in a hot-dip plating method, the elements constituting the steel sheet 10 are easily mixed into the plating layer 20 due to interdiffusion of the elements by a solid-liquid reaction between the steel sheet 10 and the plating layer 20. Due to the mixing of the elements, a certain amount of Fe is contained in the plating layer 20, and its content is generally 0.01 mass% or more. When the above interdiffusion is promoted, adhesiveness between the steel sheet 10 and the plating layer 20 is improved. From the viewpoint of improving the adhesiveness between the steel sheet 10 and the plating layer 20, an Fe content in the plating layer 20 is preferably 0.20 mass% or more.

Further, Fe may be intentionally added to a plating bath to be used when manufacturing the plating layer 20 within a range that does not impair the effect of the present invention. However, when the Fe content in the plating bath is increased, a high-melting point intermetallic compound of Fe and Al is formed in the plating bath, and the high-melting point intermetallic compound adheres, as dross, to the plating layer 20 to significantly degrade an appearance quality, which is undesirable. From this viewpoint, the Fe content in the plating bath is adjusted so that the Fe content in the plating layer 20 is 15.00 mass% or less. The Fe content in the plating layer 20 is more preferably 10.00 mass% or less.

In the plating layer 20, the balance of Al, Mg, and Fe is composed of 5.0000 mass% or more of Zn and impurities. Zn is an element necessary to constitute the main metal structure (Zn-Al-Mg-based metal structure) of the plating layer 20 according to this embodiment, and is an important element to improve the corrosion resistance of the plated steel sheet. Further, the plating layer 20 containing the above Al, Mg, and Fe in the above ranges and further containing 5.0000 mass% or more of Zn makes it possible to suppress the LME during welding.

Next, the element group A to the element group E which the chemical composition of the plating layer 20 according to another aspect of this embodiment can selectively have will be explained in detail.

Note that in the case where at least any of the following elements belonging to the element group B to element group E is contained in the plating layer 20 according to this embodiment, it is preferable that at least any of the following elements belonging to the element group B to element group E is contained in the following content range and a total content is 5.0000 mass% or less.

Setting the total content of the elements belonging to the element group B to the element group E to 5.0000 mass% or less makes it possible to enjoy the effects exhibited by the addition of the elements as explained in detail below without impairing effects each other. The total content of the elements belonging to the element group B to the element group E is preferably 1.0000 mass% or less, and more preferably 0.2000 mass% or less.

### ◊ The element group A

The element group A which the plating layer 20 can contain in another aspect of the plating layer 20 according to this embodiment will be explained. At least any of the following elements in the element group A is an element which can be contained in the plating layer 20 in place of a part of the balance Zn.
[Element group A]: one or two selected from the group consisting of Si: more than 0% and 2.00% or less and Ca: more than 0% and 2.00% or less

### [Si: 0 to 2.00 mass%]

A case where the plating layer 20 according to this embodiment does not contain Si is conceivable, and therefore the lower limit of its content is 0 mass%. On the other hand, Si is an element capable of suppressing excessive growth of a Fe-Al-based intermetallic compound phase that is formed at an interface between the plating layer and the steel sheet and further improving the adhesiveness between the plating layer and the steel sheet. In the case where Si is contained in the plating layer 20, a Si content is preferably 0.05 mass% or more and more preferably 0.20 mass% or more to suppress the excessive growth of the Fe-Al-based intermetallic compound phase.

On the other hand, if the Si content exceeds 2.00 mass%, an intermetallic compound phase for a high melting point with Mg is excessively formed to inhibit the columnar orientation of the later-explained MgZn₂ phase, so that the paint film blistering cannot be sufficiently suppressed. Therefore, in the case where Si is contained in the plating layer 20, the Si content is 2.00 mass% or less. In another aspect, when the Si content is 2.00 mass% or less, the viscosity of the plating bath can be made preferable and the operability can be improved. The Si content in the plating layer 20 is preferably 0.50 mass% or less, and more preferably 0.20 mass% or less.

### [Ca: 0 to 2.00 mass%]

A case where the plating layer 20 according to this embodiment does not contain Ca is conceivable, and therefore the lower limit of its content is 0 mass%. On the other hand, when Ca is contained in the plating layer 20, it forms intermetallic compounds with Al and Zn. Furthermore, when Si is contained together with Ca in the plating layer 20, Ca forms an intermetallic compound with Si. These intermetallic compounds have high melting points and stable structures, and therefore can further suppress the LME during welding of the plated steel sheet. In the case where Ca is contained in the plating layer 20, the effect of suppressing the LME during welding can be exhibited by setting the Ca content to 0.01 mass% or more. The Ca content in the plating layer 20 is more preferably 0.10 mass% or more.

On the other hand, if the Ca content in the plating layer 20 exceeds 2.00 mass%, the corrosion resistance of the plated steel sheet may decrease. From this viewpoint, the Ca content in the plating layer 20 is 2.00 mass% or less. The Ca content in the plating layer 20 is preferably 1.50 mass% or less, and more preferably 0.50 mass% or less.

### ◊ The element group B

Next, the element group B which the plating layer 20 can contain in another aspect of the plating layer 20 according to this embodiment will be explained. At least any of the following elements in the element group B is an element which can be contained in the plating layer 20 in place of a part of the balance Zn.

[Element group B]: one or more selected from the group consisting of Sb: more than 0% and 0.5000% or less, Pb: more than 0% and 0.5000% or less, and Sr: more than 0% and 0.5000% or less

### [Sb: 0 to 0.5000 mass%]

### [Pb: 0 to 0.5000 mass%]

### [Sr: 0 to 0.5000 mass%]

A case where the plating layer 20 according to this embodiment does not contain Sb, Pb, and Sr is conceivable, and therefore the lower limits of the contents of these elements are 0 mass%. On the other hand, when at least any of Sb, Pb, and Sr is contained in the plating layer 20, spangles are formed on the surface of the plating layer 20, making it possible to improve metallic luster. Therefore, from the viewpoint of further improving the design of the plated steel sheet, at least any of Sb, Pb, and Sr is preferably contained in the plating layer 20. The design improvement effect is exhibited when the content of at least any of Sb, Pb, and Sr is 0.0500 mass% or more. Therefore, when at least any of Sb, Pb, and Sr is contained in the plating layer 20, the contents of these elements are each independently preferably 0.0500 mass% or more.

On the other hand, when forming the plating layer 20 in which any of the contents of Sb, Pb, and Sr exceeds 0.5000 mass%, an amount of dross generated in the plating bath used to form the plating layer 20 increases, so that a plated steel sheet with good plating properties cannot be manufactured. Therefore, the contents of Sb, Pb, and Sr in the plating layer 20 are each independently preferably 0.5000 mass% or less. The contents of Sb, Pb, and Sr are each independently preferably 0.2000 mass% or less.

### ◊ The element group C

Next, the element group C which the plating layer 20 can contain in another aspect of the plating layer 20 according to this embodiment will be explained. At least any of the following elements in the element group C is an element which can be contained in the plating layer 20 in place of a part of the balance Zn.

[Element group C]: one or more selected from the group consisting of Co: more than 0% and 1.0000% or less, V: more than 0% and 1.0000% or less, Cu: more than 0% and 1.0000% or less, Ti: more than 0% and 1.0000% or less, Cr: more than 0% and 1.0000% or less, Nb: more than 0% and 1.0000% or less, Ni: more than 0% and 1.0000% or less, Mn: more than 0% and 1.0000% or less, and Mo: more than 0% and 1.0000% or less

### [Co: 0 to 1.0000 mass%]

[V: 0 to 1.0000 mass%]
[Cu: 0 to 1.0000 mass%]
[Ti: 0 to 1.0000 mass%]
[Cr: 0 to 1.0000 mass%]
[Nb: 0 to 1.0000 mass%]
[Ni: 0 to 1.0000 mass%]
[Mn: 0 to 1.0000 mass%]

A case where the plating layer 20 according to this embodiment does not contain Co, V, Cu, Ti, Cr, Nb, Ni, and Mn is conceivable, and therefore the lower limits of the contents of these elements are 0 mass%. On the other hand, when at least any of Co, V, Cu, Ti, Cr, Nb, Ni, and Mn is contained in the plating layer 20, these elements are incorporated into the Fe-Al-based metal structure formed by welding when the plated steel sheet is welded, so that the corrosion resistance of a welded portion to be formed can be further improved. The effect of improving the corrosion resistance of the welded portion is exhibited when the content of at least any of Co, V, Cu, Ti, Cr, Nb, Ni, and Mn in the plating layer 20 is 0.0050 mass% or more. Therefore, when at least any of Co, V, Cu, Ti, Cr, Nb, Ni, and Mn is contained in the plating layer 20, the contents of these elements are each independently preferably 0.0050 mass% or more.

On the other hand, when forming the plating layer 20 in which any of the contents of Co, V, Cu, Ti, Cr, Nb, Ni, and Mn exceeds 1.0000 mass%, these elements form various intermetallic compounds in the plating bath for forming the plating layer 20, thus causing an increase in viscosity of the plating bath to fail to manufacture a plated steel sheet with good plating properties. Therefore, the contents of Co, V, Cu, Ti, Cr, Nb, Ni, and Mn in the plating layer 20 are each independently 1.0000 mass% or less. The contents of Co, V, Cu, Ti, Cr, Nb, Ni, and Mn are each independently preferably 0.2000 mass% or less.

### [Mo: 0 to 1.0000 mass%]

A case where the plating layer 20 according to this embodiment does not contain Mo is conceivable, and therefore the lower limit of its content is 0 mass%. On the other hand, when Mo is contained in the plating layer 20, the corrosion resistance can be further improved. The effect of improving the corrosion resistance is exhibited when the Mo content is 0.0100 mass% or more. Therefore, when Mo is contained, its content is preferably 0.0100 mass% or more.

On the other hand, when forming the plating layer 20 in which the Mo content exceeds 1.00 mass%, it undesirably causes a large amount of dross generated in the plating bath to be used. Therefore, the Mo content is 1.0000 mass% or less. The Mo content is preferably 0.0500 mass% or less.

### ◊ The element group D

Next, the element group D which the plating layer 20 can contain in another aspect of the plating layer 20 according to this embodiment will be explained. The following elements in the element group D are elements which can be contained in the plating layer 20 in place of a part of the balance Zn.
[Element group D]: one or more selected from the group consisting of In: more than 0% and 1.0000% or less, Bi: more than 0% and 1.0000% or less, and Sn: more than 0% and 1.0000% or less

### [In: 0 to 1.0000 mass%]

[Bi: 0 to 1.0000 mass%]
[Sn: 0 to 1.0000 mass%]

A case where the plating layer 20 according to this embodiment does not contain In, Bi, and Sn is conceivable, and therefore the lower limits of their contents are 0 mass%. In, Bi, and Sn are elements that increase an Mg dissolution rate when the plating layer 20 containing them is placed in the corrosive environment. When the Mg dissolution rate increases, Mg ions are supplied to portions where the steel sheet 10 is exposed, so that the corrosion resistance is further improved. From this viewpoint, when In, Bi, and Sn are contained, their contents are preferably 0.00500 mass% or more.

On the other hand, excessive addition of In, Bi, and Sn may excessively promote the Mg dissolution rate and decrease the corrosion resistance of the plated steel sheet. The increase in the Mg dissolution rate becomes pronounced when any of the contents of In, Bi, and Sn exceeds 1.0000 mass%, so that the contents of In, Bi, and Sn are 1.0000 mass% or less. The contents of In, Bi, and Sn are preferably 0.2000 mass% or less.

### ◊ The element group E

Next, the element group E which the plating layer 20 can contain in another aspect of the plating layer 20 according to this embodiment will be explained. At least any of the following elements in the element group E is an element which can be contained in the plating layer 20 in place of a part of the balance Zn.
[Element group E]: one or more selected from the group consisting of Zr: more than 0% and 1.0000% or less, Ag: more than 0% and 1.0000% or less, and Li: more than 0% and 1.0000% or less

### [Zr: 0 to 1.0000 mass%]

[Ag: 0 to 1.0000 mass%]
[Li: 0 to 1.0000 mass%]

A case where the plating layer 20 according to this embodiment does not contain Zr, Ag, and Li is conceivable, and therefore the lower limits of the contents of these elements are 0 mass%. On the other hand, when at least any of Zr, Ag, and Li is contained in the plating layer 20, the plating operability can be further improved. The effect of improving the plating operability is exhibited when the content of at least any of Zr, Ag, and Li in the plating layer 20 is 0.0100 mass% or more. Therefore, when at least any of Zr, Ag, and Li is contained, the contents of these elements are each independently preferably 0.0100 mass% or more.

On the other hand, when forming the plating layer 20 in which any of the contents of Zr, Ag, and Li exceeds 1.00000 mass%, a large amount of dross is likely to be generated in the plating bath to be used for forming the plating layer 20. Therefore, each content of at least any of Zr, Ag, and Li is independently 0.10000 mass% or less. Each content of at least any of Zr, Ag, and Li is independently preferably 0.1000 mass% or less.

### ◊ The element group F

Next, the element group F which the plating layer 20 can contain in another aspect of the plating layer 20 according to this embodiment will be explained. At least any of the following elements in the element group F is an element which can be contained in the plating layer 20 in place of a part of the balance Zn.
[Element group F]: one or more selected from the group consisting of La: more than 0% and 0.5000% or less, Ce: more than 0% and 0.5000% or less, and Y: more than 0% and 0.5000% or less

### [La: 0 to 0.5000 mass%]

[Ce: 0 to 0.5000 mass%]
[Y: 0 to 0.5000 mass%]

A case where the plating layer 20 according to this embodiment does not contain La, Ce, and Y is conceivable, and therefore the lower limits of the contents of these elements are 0 mass%. On the other hand, La, Ce, and Y are elements that exhibit almost the same effect as Ca and further suppress the blowhole formation during welding. This is because an atomic radius of each element is close to the atomic radius of Ca. When these elements are contained in the plating layer 20, they replace Ca positions. Therefore, these elements are detected at the same positions as Ca by EDS (Energy Dispersive X-ray Spectroscopy). Further, also in the case where these elements become oxides after welding of the plated steel sheet, the oxides of the elements are detected at the same positions of CaO.

The effect of suppressing the blowhole formation during welding is exhibited when the contents of these elements are each independently 0.0100 mass% or more. Therefore, when at least any of Zr, Ag, and Li is contained, the contents of these elements are each independently preferably 0.0100 mass% or more. The contents of La, Ce, and Y in the plating layer 20 are each independently more preferably 0.0500 mass% or more.

On the other hand, if the La, Ce, and Y contents in the plating bath for manufacturing the plating layer 20 are too high, the viscosity of the plating bath may increase more than necessary and the plating operability may decrease. Therefore, the La, Ce, and Y contents in the plating bath are adjusted from the viewpoint of the plating operability, so that the contents of La, Ce, and Y are each independently 0.5000 mass% or less. The contents of La, Ce, and Y are each independently preferably 0.1000 mass% or less.

### ◊ The element group G

Next, the element group G which the plating layer 20 can contain in another aspect of the plating layer 20 according to this embodiment will be explained. The following element in the element group G is an element which can be contained in the plating layer 20 in place of a part of the balance Zn.
[Element group G]: B: more than 0% and 0.5000% or less

### [B: 0 to 0.5000 mass%]

A case where the plating layer 20 according to this embodiment does not contain B is conceivable, and therefore the lower limit of its content is 0 mass%. On the other hand, when B is contained in the plating layer 20, there is an effect of further suppressing the LME. This is presumably because when B is contained in the plating layer 20, it combines with at least any of Zn, Al, Mg, and Ca to form various intermetallic compounds. Further, the presence of B in the plating layer 20 is considered to produce the effect of further suppressing the LME of the steel sheet 10 because B diffuses from the plating layer 20 into the steel sheet 10 and strengthens the grain boundary. Furthermore, it is presumed that since the various intermetallic compounds formed concerning B have extremely high melting points, they also act in suppressing the Zn combustion during welding. These improvement effects are exhibited when 0.05 mass% or more of B is contained. Therefore, when B is contained, the content of B is preferably 0.0500 mass% or more.

On the other hand, if B is excessively contained in the plating bath so that B is contained in the plating layer 20, a plating melting point rapidly increases to decrease the plating operability, failing to manufacture a plated steel sheet with excellent plating property. The decrease in plating operability becomes pronounced when the content of B exceeds 0.5000 mass%, so that the content of B is 0.5000 mass% or less. The content of B is preferably 0.1000 mass% or less.

### [Measurement method of the chemical components]

The chemical components of the above plating layer 20 can be measured using ICP-AES (Inductively Coupled Plasma Atomic Emission Spectrometry) or ICP-MS (Inductively Coupled Plasma Mass Spectrometry). Note that ICP-AES shall be used in the case of analyzing the chemical component up to 0.1 mass% unit, and ICP-MS shall be used in the case of analyzing the chemical component in a trace amount of less than 0.1 mass%. The plated steel sheet is immersed in a 10% HCl aqueous solution with an inhibitor added for about 1 minute to peel off the plating layer part, thereby preparing the solution dissolving the plating layer. The obtained solution can be analyzed by ICP-AES or ICP-MS to obtain chemical components as an overall average of the plating layer.

### ◊ Regarding the deposition amount of the plating layer 20

The deposition amount of the plating layer 20 as explained above is not particularly specified and is preferably, for example, about 15 to 250 g/m² per one side of the steel sheet. When the deposition amount of the plating layer 20 falls within the above range, the plated steel sheet 1 according to this embodiment can exhibit sufficient corrosion resistance. The thickness of the plating layer 20 having the deposition amount is approximately about 5 to 40 µm.

Note that the deposition amount of the plating layer 20 is measured such that a sample having a size of 30 mm × 30 mm in plan view is cut out from the plated steel sheet and the mass of the sample is measured in advance. Note that when cutting out the sample, it is cut out entirely in the thickness direction. A tape seal is bonded to one side of the sample to prevent the plating layer on the one side from dissolving in the next process. The sample is then immersed in a 10% HCl aqueous solution with an inhibitor added to peel off the plating layer by pickling, and the mass of the sample after pickling is measured. From a change in mass of the sample between before and after pickling, the deposition amount of the plating layer 20 per side can be decided.

### ◊ Regarding the metal structure of the plating layer 20

Next, the metal structure of the plating layer 20 having the chemical composition explained above will be explained.

The plating layer 20 according to this embodiment has the above chemical composition and is formed through a manufacturing method as will be explained in detail below, and thereby contains metal phases such as an ηZn phase, an α phase, a τ phase, a MgZn₂ phase, a Mg₂Zn₃ phase, a MgZn phase, and so on and intermetallic compound phases (metal structures). Further, the plating layer 20 can contain metal structures such as an Al-Si-Ca phase, an Al-Si-Ca-Fe phase, a Mg₂Si phase, a Mg₂Sn phase, and so on in addition to the above metal structures depending on elements which the plating layer 20 can further contain. The plating layer 20 according to this embodiment has the above metal structures and thereby comes to exhibit the properties that suppress the occurrence of the LME and is excellent also in corrosion resistance.

Here, which metal structures the plating layer 20 according to this embodiment has can be identified by observing the surface of the plating layer 20 under a scanning electron microscope (SEM). In other words, it is possible to observe solidified structures of the plating layer 20 under the SEM and identify which metal structures the plating layer 20 has from a point analysis result by a SEM-EPMA (Electron Probe Microanalyzer) and the form of a crystal phase in the reflected electron image in an observation field of view. In this event, for example, a pre-treatment such as polishing does not need to be performed before the SEM observation. However, if a conversion treatment film or the like is applied, polishing or the like may be performed to remove the conversion treatment film. In the case of performing polishing, the polishing is performed such that 80% or more of the thickness of the plating layer remains, and the surface is brought into a mirror finish state, then observed under the SEM, and regarded as a surface structure.

More specifically, for example, JXA-8500 manufactured by JEOL Ltd. is used as an analyzer, arbitrary five positions are set as observation positions, and a size of a region to be observed per position is set to 40 µm × 40 µm. This range is observed with an acceleration voltage: 15.0 kV, an irradiation current: 5.0 × 10⁻⁷ A, an irradiation time: 50 milliseconds, and a magnification of 4000 times. The reflected electron image in the range to be focused on is acquired under these conditions, and then the point analysis for each of the metal structures is performed using the contrast in the reflected electron image.

The present inventors focused attention on the MgZn₂ phase of the above metal structures when considering paint film blistering at the welded portion occurring during welding.

The MgZn₂ phase is a phase of an intermetallic compound of Mg and Zn formed in the plating layer 20 according to this embodiment. The MgZn₂ phase is contained as a phase for improving the corrosion resistance and the weldability. In other words, the MgZn₂ phase is higher in insulation property and corrosion resistance than the Zn phase. Further, the MgZn₂ phase is lower in corrosion potential and better in sacrificial corrosion resistance than the Zn phase and improves the corrosion resistance around the welded portion. Further, the MgZn₂ phase densifies a corrosion product after welding and suppresses red rust. Further, the MgZn₂ phase suppresses combustion of the plating layer 20 during welding. In the plating layer 20 according to this embodiment, further, the orientation in the crystal orientation of the MgZn₂ phase is controlled into the columnar orientation to suppress the paint film blistering.

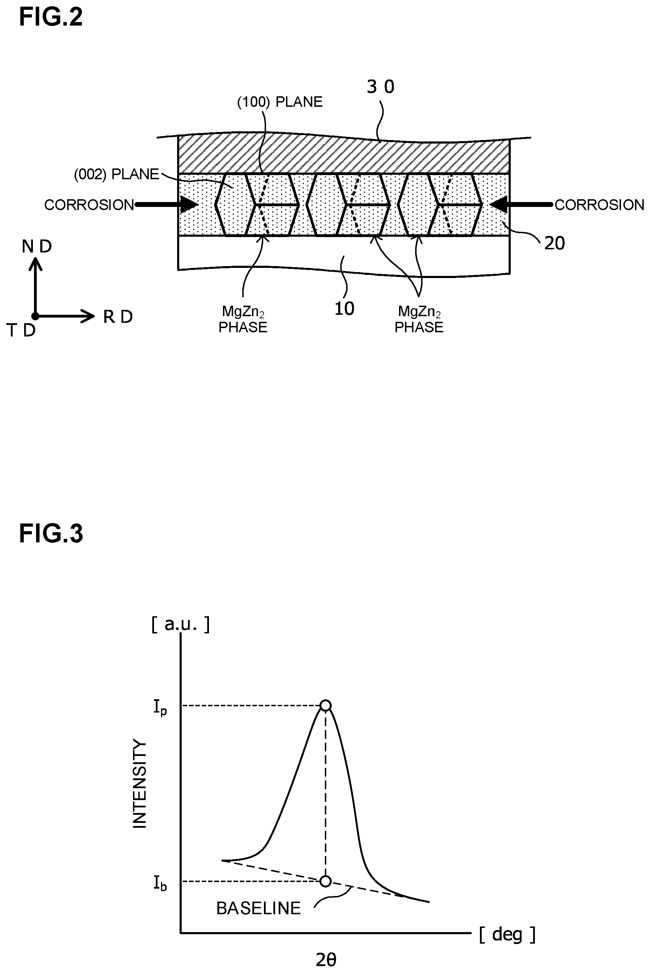

The columnar orientation of the MgZn₂ phase in the plating layer 20 according to this embodiment will be explained using FIG. 2. FIG. 2 is a schematic view illustrating the outline of the columnar orientation of the MgZn₂ phase according to this embodiment and the outline of the paint film blistering occurring in the plated steel sheet 1.

First, the crystal structure of the MgZn₂ phase in the plating layer 20 according to this embodiment will be explained. The MgZn₂ phase has a hexagonal crystal structure in which three unit cells each having a quadrangular prism structure gather to form a hexagonal column structure as illustrated in FIG. 2. In the hexagonal column structure illustrated in FIG. 2, a plane indicated by a hexagon is the (002) plane of the MgZn₂ phase, and one of column planes orthogonal to the (002) plane of the MgZn₂ phase is the (100) plane of the MgZn₂ phase. Note that the size of the MgZn₂ phase illustrated in FIG. 2 is for convenience and does not mean that a single crystal of that size is formed.

Next, the columnar orientation of the MgZn₂ phase in the plating layer 20 according to this embodiment will be explained. In plating layer 20 according to this embodiment, the (100) plane of the MgZn₂ phase is oriented to be a plane perpendicular to an ND (Normal Direction) axis in a normal direction to an RD-TD plane (namely, a plane parallel to the RD-TD plane) in a material coordinate system defined by an RD (Rolling Direction) axis and a TD (Transversal Direction: direction orthogonal to the rolling direction, width direction) axis when performing polar point measurement in an X-ray diffraction (XRD).

Here, the (100) plane of the MgZn₂ phase is a crystal plane perpendicular to the (002) plane of the MgZn₂ phase. Therefore, the (100) plane of the MgZn₂ phase is oriented to become a plane perpendicular to the ND axis, and the (002) plane of the MgZn₂ phase is thereby oriented to become a plane parallel to the ND axis (namely, to become a plane perpendicular to the RD-TD plane). Note that the (002) plane of the MgZn₂ phase only needs to be parallel to the ND axis, and the orientation on the RD-TD plane (orientation with respect to the RD axis or the TD axis) is not particularly limited.

Next, the paint film blistering will be explained. For the plated steel sheet 1 according to this embodiment, paint is performed on the plating layer 20 after welding to form a paint film 30. Under the paint film 30 at the heat affected zone, corrosion (namely, corrosion under paint film) of the plating layer 20 may occur. As indicated with bold arrows (corrosion) in FIG. 2, the corrosion under paint film progresses in a direction perpendicular to the ND axis. With the progress of the corrosion under paint film, the thickness of the plating layer 20 changes and the thickness of the paint film 30 formed on the plating layer 20 changes to cause the paint film blistering.

The present inventors performed verification about the corrosion under paint film, and have newly found that when the corrosion under paint film progresses in the MgZn₂ phase, the progress of the corrosion under paint film is suppressed in a direction perpendicular to the (002) plane of the MgZn₂ phase than in a direction perpendicular to the other crystal plane of the MgZn₂ phase. This is considered that the (002) plane is a dense surface of the crystal of MgZn₂.

Based on the above findings, the present inventors have obtained an idea that it might be possible to suppress the progress of the corrosion under paint film so as to suppress the paint film blistering by orientating the (002) plane of the MgZn₂ phase perpendicular to the progress direction of the corrosion under paint film. Note that although the corrosion under paint film progresses in an arbitrary direction within the RD-TD plane, the (002) plane of the MgZn₂ phase is oriented randomly regarding the orientation on the RD-TD plane. Accordingly, the MgZn₂ phase having the (002) plane perpendicular to the arbitrary progress direction of the corrosion under paint film is included in the plating layer 20. The orientation of the MgZn₂ phase so that the (002) plane of the MgZn₂ phase is perpendicular to the progress direction of the corrosion under paint film as above is called a columnar orientation herein.

In the plating layer 20 according to this embodiment, the success or failure of the columnar orientation of the MgZn₂ phase can be determined based on whether the following conditions are satisfied using the XRD. Specifically, it can be determined that the columnar orientation of the (002) plane as illustrated in FIG. 2 is realized when a peak intensity ratio I₁₀₀/I₀₀₂ of an intensity I₁₀₀ of a peak corresponding to the (100) plane of the MgZn₂ phase to an intensity I₀₀₂ of a peak corresponding to the (002) plane of the MgZn₂ phase is 2.50 or more in the measured result obtained when the surface of the plating layer 20 according to this embodiment is measured by a commercially available wide-angle X-ray diffraction apparatus.

The commercially available wide-angle X-ray diffraction apparatus (for example, RINT 1500 manufactured by Rigaku Corporation or the like)
- X-ray source: Cu tube bulb
- Voltage: 40 kV
- Current: 150 mA
- Attachment: sample changer sample stage
- Filter: no
- Monochromator: use

In more detail, the surface of the plating layer 20 to be focused on is observed by the above XRD without performing a pre-treatment such as polishing. In this event, an arbitrary position on the surface of the plating layer 20 is observed, and the peak intensity ratio I₁₀₀/I₀₀₂ is calculated. The above measurement and calculation processing is performed at arbitrary five points on the surface of the plating layer 20, and an average value of the five peak intensity ratios I₁₀₀/I₀₀₂ obtained is regarded as the peak intensity ratio I₁₀₀/I₀₀₂ in the plating layer 20 according to this embodiment.

Note that in the XRD spectrum measured according to the above measurement conditions, the peak corresponding to the (100) plane is a peak observed at 2θ = 19.67 ± 0.4°, and the peak corresponding to the (002) plane is a peak observed at 2θ = 20.79 ± 0.4°. Further, when two or more peaks are observed in the range, the one existing at a position nearer to a reference position shall be employed as a corresponding peak.

Further, the intensity of the peak belonging to each plane direction shall be the one obtained by subtracting an intensity I_{b} on the baseline from an intensity Iₚ of the peak to be focused on (namely, "Iₚ - I_{b}") while taking the baseline of the peak to be focused on into account in the XRD spectrum as schematically illustrated in FIG. 3.

When the peak intensity ratio I₁₀₀/I₀₀₂ is less than 2.50, the orientation state of the MgZn₂ phase is not in the state of the columnar orientation as illustrated in FIG. 2, failing to sufficiently suppress the paint film blistering due to the progress of the corrosion under paint film at the heat affected zone. The peak intensity ratio I₁₀₀/I₀₀₂ is preferably 5.00 or more, and more preferably 10.00 or more.

On the other hand, the upper limit of the peak intensity ratio I₁₀₀/I₀₀₂ is not particularly limited, and the upper limit is actually about 30 though it is understood that the orientation state is more preferable as the intensity ratio is higher.

Note that when the orientation control of the MgZn₂ phase is not performed but the MgZn₂ phases randomly exist in the parent phase, the above peak intensity ratio I₁₀₀/I₀₀₂ theoretically indicates a value of 1.75 ± 0.02.

### ◊ Regarding the tensile strength of the plated steel sheet

The tensile strength of the plated steel sheet 1 according to this embodiment depends on the tensile strength of the steel sheet 10 used as a base material. Therefore, the tensile strength of the plated steel sheet 1 according to this embodiment is 780 MPa or more in an aspect, and is 980 MPa or more in another aspect. The tensile strength of the plated steel sheet 1 can be measured by a publicly-known method. As an example, a test piece having a size that can be taken from a member among test pieces defined in JIS Z 2201 (2011) is created from the plated steel sheet 1 whose tensile strength is desired to be measured, and the tensile strength of the test piece is measured by the method defined in JIS Z 2241 (2011).

### ◊ Regarding the carbon (C) concentration of the plated steel sheet surface

In the plated steel sheet 1 according to this embodiment, measurement is performed in a depth direction starting from the surface of the plating layer 20 by glow discharge optical emission spectrometry (GDS) to measure a depth profile regarding the distributions of Zn, Fe, and C.

Note that the measurement by the GDS can be performed under the following conditions using the commercially available glow discharge optical emission spectrometer.

### ◊ Commercially available glow discharge optical emission spectrometer (for example, manufactured by LECO JAPAN CORPORATION (morel number GDS 850A) or the like)

Ar gas pressure: 0.27 MPa
Anode diameter: 4 mmΦ
RF (radio frequency) output: 30 W

In the obtained measured result, first, a position being an interface between the plating layer 20 and the steel sheet 10 is defined. More specifically, the depth at which a curve indicating the intensity of Zn and a curve indicating the intensity of Fe intersect with each other in a depth profile regarding the obtained distributions of Zn and Fe is regarded as the interface between the plating layer 20 and the steel sheet 10. Next, the change in the C concentration is confirmed starting from the interface in the depth profile regarding the distribution of C. Specifically, the C concentration to be focused on below can be said the C concentration at a portion of the steel sheet 10 adjacent to the interface between the plating layer 20 and the steel sheet 10.

The plated steel sheet 1 according to this embodiment has, in an aspect, a depth at which the C concentration is 0.05% or less by mass% is 10 µm or more starting from the interface. The depth at which the C concentration is 0.05% or less by mass% of 10 µm or more makes it possible to further suppress the LME during welding of the plated steel sheet 1. C in the steel is an element promoting the LME and therefore becomes a starting point where the LME cracking occurs. Therefore, decreasing the C concentration in the steel surface layer makes it possible to further suppress the LME during welding to improve the LME resistance. The depth at which the C concentration is 0.05% or less by mass% is preferably 15 µm or more. On the other hand, the upper limit of the depth at which the C concentration is 0.05% or less by mass% is not particularly limited.

Here, the C concentration of a surface layer portion of the steel sheet 10 is set to a desired value by controlling the conditions of decarburization annealing performed on the steel sheet 10. The decarburization annealing is performed when necessary during manufacture of the plated steel sheet.

The plated steel sheet 1 according to this embodiment has been explained above in detail referring to FIG. 1A to FIG. 3. The plated steel sheet 1 according to this embodiment as explained above can be preferably used, for example, as a material for automobile undercarriage parts.

Note that the plated steel sheet 1 according to this embodiment may further have one or more layers of various types of films on the plating layer 20. Examples of the film include a chromate film, a phosphate film, a chromate-free film, an organic resin film, and so on.

### (Regarding a manufacturing method for the plated steel sheet)

Next, an example of a manufacturing method for the plated steel sheet as explained above will be explained. The plated steel sheet 1 according to this embodiment is manufactured by using the steel sheet 10 as explained above as a base material and applying strain to the surface of the steel sheet 10 by heavy duty grinding and then forming the plating layer 20 on the surface to which the strain has been applied.

In a process of heavy duty grinding, by grinding the surface of the steel sheet 10 by a heavy duty grinding brush to apply strain to the surface, a nucleation site for growing the MgZn₂ phase into the columnar orientation is formed on the surface of the steel sheet 10. Thereafter, a specific thermal treatment is performed on the plating layer 20 formed on the surface of the steel sheet 10, whereby the MgZn₂ phase grows to have the columnar orientation. Further, by applying strain to the surface, Zn-Fe alloying is promoted during welding of the plated steel sheet 1, so that the LME can be further suppressed.

For the formation of the plating layer 20, a thermal spraying method, cold spraying method, sputtering method, vapor deposition method, electroplating method, and the like can be applied in addition to a hot-dip plating method. However, the hot-dip plating method is the most preferable in terms of cost in order to form a plating layer with a thickness generally used in automobiles and the like.

Thereafter, by performing a specific thermal treatment process explained below on the obtained plated steel sheet (steel sheet 10 having the plating layer 20), the plated steel sheet 1 according to this embodiment can be manufactured.

Hereinafter, an example of the manufacturing method for obtaining the plated steel sheet 1 according to this embodiment using the hot-dip plating method will be explained in detail.

In the manufacturing process of the plated steel sheet 1, first, the steel sheet 10 to be used as the base material is rolled by a Sendzimir method to a desired thickness, and then coiled and installed on a hot-dip plating line.

On the hot-dip plating line, the steel sheet is continuously passed while being unrolled from the coil. At the passing of the steel sheet, the heavy duty grinding brush provided at a predetermined position applies strain to the surface of the steel sheet. Thereafter, the steel sheet is subjected to a heat reduction treatment by an annealing facility installed on the line at 700 to 900°C for more than 0 seconds and 300 seconds or less in an atmosphere of a N₂-(1 to 10)% H₂ gas at a dew point of -60 to 10°C under an environment with an oxygen concentration of 20 ppm or less where oxidation is less likely to occur, then air-cooled with a N₂ gas down to about a bath temperature of the plating bath at a subsequent stage + 20°C, and then immersed in the plating bath. Note that the strain is applied to the steel sheet before the annealing in the above flow, but even if at least part of the applied stain is released by the annealing, the re-crystallization occurring in a steel surface layer is promoted during the annealing, so that Fe becomes finer in grain size and comes to function as a nucleation site at the solidification of the plating layer in the plating process at the subsequent stage.

In a process of the heat-reduction treatment, decarburization of the surface of the steel sheet 10 may be performed. In the case of performing the decarburization, a dew point in a N₂-(1 to 10)% H₂ atmosphere gas in the process of the heat-reduction treatment is set to -10 to 10°C. According to the manufacturing method including the decarburization, the depth at which the C concentration is 0.05% or less by mass% can be made 10 µm or more in the measured result by the GDS in the depth direction of the plated steel sheet 1 to be manufactured. In the case of not performing the decarburization, the dew point in the N₂-(1 to 10)% H₂ atmosphere gas in the process of the heat-reduction treatment may be set to -30 to -70°C.

Here, a plating alloy in a molten state having the chemical components as above is prepared in the plating bath in advance. The bath temperature of the plating bath is set to the melting point of the plating alloy or higher (for example, approximately 460 to 660°C). In this event, the bath temperature of the plating bath is preferably decided to a value of a theoretical temperature of higher (for example, about a theoretical temperature + 40°C) while focusing attention on the above melting point of the plating alloy and based on the "theoretical temperature at which a MgZn₂ phase nucleates" (hereinafter, referred to also as a theoretical temperature) explained below.

When producing the material of the plating alloy, it is preferable to prepare it using pure metal (purity of 99% or more) as the alloy material. First, a predetermined amount of the alloy metal is mixed so as to obtain the composition of the plating layer as explained above, and completely melted into an alloy using a high-frequency induction furnace, arc furnace, or the like in vacuum or inert gas replacement state. Furthermore, the alloy mixed with the predetermined components (composition of the above plating layer) is melted in air, and the resulting melt is used as the plating bath.

Note that there is no particular restriction on using the pure metal in the production of the plating alloy as explained above, and existing Zn alloy, Mg alloy, and Al alloy may be melted and used. In this case, there is no problem as long as a predetermined composition alloy with less impurities is used.

The steel sheet is immersed in the plating bath as explained above, and then pulled up at a predetermined speed. In this event, a plating deposition amount is controlled by, for example, a N₂ wiping gas so that the plating layer 20 to be formed has a desired thickness. Here, for the conditions other than the bath temperature, general plating operation conditions may be applied, and no special facilities or conditions are required.

Next, a first cooling process and a second cooling process as follows are performed on the plating alloy in a molten state located on the steel sheet with the surface to which the strain has been applied by the heavy duty grinding brush, to make the plating alloy in the molten state into the plating layer 20 and to grow the MgZn₂ phase into the columnar orientation. Hereinafter, the first cooling process and the second cooling process will be explained in detail.

The first cooling process is a cooling process performed when the temperature of the plating alloy is in a range from the bath temperature to the "theoretical temperature at which the MgZn₂ phase nucleates" (theoretical temperature). In the first cooling process, the plated steel sheet in the above temperature range is rapidly cooled at an average cooling rate of 15 °C/sec or more by spraying a cooling medium at a flow rate of 3000 L/m²/min or less in an atmosphere at a dew point of -20°C or lower. Note that when the hot-dip plating method is employed in the plating process, the first cooling process is performed immediately after the steel sheet is pulled up from the plating bath. This causes the MgZn₂ phase to nucleate at the nucleation site formed on the surface of the steel sheet. At the bath temperature to the theoretical temperature in the first cooling process, crude oxides are likely to form on the surface of the plating layer. In order to prevent oxidation in such a high-temperature range, the cooling is performed with the dew point set to -20°C or lower and at a relatively high cooling rate. Besides, if the flow rate of the cooling medium is excessive at the cooling rate, not the interface between the plating layer and the base steel but the surface of the plating layer becomes the nucleation site. In this case, even if the cooling in the subsequent second cooling process is performed, the orientation control of the MgZn₂ phase becomes difficult. Therefore, the flow rate of the cooling medium is set to 3000 L/m²/min or less.

Here, the above "theoretical temperature at which the MgZn₂ phase nucleates" (theoretical temperature) can be decided from a calculation state diagram according to the CALPHAD method regarding the Mg-Al-Zn ternary system.

The flow rate of the cooling medium in the first cooling process is preferably 1500 L/m²/min or less, and more preferably 1000 L/m²/min or less. Further, the average cooling rate is preferably 25 °C/sec or more. Note that the lower limit value of the flow rate of the cooling medium is not particularly specified and, for example, about 5 L/m²/min is a substantial lower limit. Further, the upper limit value of the average cooling rate is also not particularly specified and, for example, about 90 °C/sec is a substantial upper limit.

Thereafter, when the temperature of the plating alloy (plating layer) is within a range of the "theoretical temperature at which the MgZn₂ phase nucleates" (theoretical temperature) to 300°C, the second cooling process is performed in an atmosphere at a dew point of 0°C or higher. This second cooling process gradually cools the plated steel sheet within the above temperature range at an average cooling rate of 5 °C/sec or less by spraying the cooling medium at a flow rate of 5000 L/m²/min or less. This grows the nucleated MgZn₂ phase into the columnar orientation. At equal to or lower than the theoretical temperature in the second cooling process, the dew point is set to 0°C or higher and gradual cooling is performed at a relatively low cooling rate from the viewpoint of forming a dense oxide in a low temperature range.

The flow rate of the cooling medium in the second cooling process is preferably 3000 L/m²/min or less, and more preferably 2000 L/m²/min or less. Besides, the average cooling rate is preferably 3 °C/sec or less, and more preferably 1 °C/sec or less. Note that the lower limit value of the flow rate of the cooling medium is not particularly specified and, for example, about 500 L/m²/min is a substantial lower limit.

Note that regrading the switching of the average cooling rate and the dew point from the first cooling process to the second cooling process, providing two or more piping systems for the atmosphere gas to be sprayed for controlling the dew point is preferable because smooth switching is enabled. Besides, in the case where it is difficult to simultaneously switch both the average cooling rate and the dew point at the theoretical temperature, the average cooling rate may be switched at the theoretical temperature and the atmosphere gas for controlling the dew point may be switched in a range of (theoretical temperature ± 10)°C.

As explained above, the plating layer is formed in a state where the strain is applied to the surface of the steel sheet by the heavy duty grinding brush, and the plating layer is subjected to a two-stage cooling process of the rapid cooling in the temperature range of the bath temperature to the theoretical temperature and the gradual cooling in the temperature range of the theoretical temperature to 300°C while the flow rate of the cooling medium and the dew point are being controlled, whereby the MgZn₂ phase in the plating layer 20 can be grown into the columnar orientation.

Note that the cooling state from 300°C to room temperature is not particularly specified, and the cooling down to room temperature may be performed by various methods.

Here, an interval between the end of the first cooling process and the start of the second cooling process is preferably within 3 seconds, and the second cooling process is preferably started immediately after the end of the first cooling process. If the interval between the end of the first cooling process and the start of the second cooling process exceeds 3 seconds, an unintended cooling process occurs to fail to realize the desired orientation control.

Note that when any one of the above first cooling process and second cooling process is not performed even if the strain has been appropriately applied to the surface of the steel sheet, the desired orientation control cannot be realized. The plating layer 20 according to this embodiment in which the orientation direction is controlled as illustrated in FIG. 2 can be realized by appropriately applying the strain to the surface of the steel sheet and then performing both the first cooling process and the second cooling process as above.

Further, when an alloying thermal treatment process (for example, a thermal treatment process involving heating to an ultimate sheet temperature of about 480 to 550°C) which is often performed generally in the manufacture of an alloyed hot-dip galvanized steel sheet is applied after the above second cooling process, the columnar orientation of the MgZn₂ phase controlled by the first cooling process and the second cooling process is disrupted, resulting in a failure to obtain the effect of suppressing the paint film blistering focused on in this embodiment. From this viewpoint, it is important not to perform the thermal treatment process after the second cooling process.

Here, in the above cooling treatment, generally known methods such as N₂ gas cooling and the like can be applied. Further, in addition to the N₂ gas, gases high in heat removal effect such as a He gas and a hydrogen gas may be used as the cooling gas.

Note that as a substantial measurement method of the temperature of the plating layer, a contact-type thermocouple (K-type) only needs to be used. By attaching the contact-type thermocouple to the steel sheet as the base material, the average temperature of the entire plating layer can be always monitored. Besides, by mechanically controlling various speeds and thicknesses and standardizing various operating conditions such as a preheating temperature of the steel sheet and the temperature of the plating bath, the temperature of the entire plating layer at that point in time under the manufacturing conditions can be monitored almost accurately. This makes it possible to precisely control the cooling treatments in the first cooling process and the second cooling process. Note that the surface temperature of the plating layer may also be measured by a non-contact radiation thermometer, although not as accurate as the contact type.

Further, a relationship between the surface temperature of the plating layer and the average temperature of the entire plating layer may be found by a simulation that performs heat conduction analysis. Specifically, the surface temperature of the plating layer and the average temperature of the entire plating layer are found based on various manufacturing conditions such as the preheating temperature of the steel sheet, the temperature of the plating bath, the pulling-up speed of the steel sheet from the plating bath, the sheet thickness of the steel sheet, the layer thickness of the plating layer, an amount of heat exchange between the plating layer and the manufacturing facility, and a heat release amount of the plating layer. Then, using the obtained results, the relationship between the surface temperature of the plating layer and the average temperature of the entire plating layer may be found. This makes it possible to estimate the average temperature of the entire plating layer at that point in time under the manufacturing conditions by actually measuring the surface temperature of the plating layer during the manufacture of the plated steel sheet. As a result, the cooling treatments in the first cooling process and the second cooling process can be precisely controlled.

One example of the manufacturing method for the plated steel sheet according to this embodiment has been concretely explained above.

Note that in the manufacturing method for the plated steel sheet according to this embodiment, a treatment for further forming one layer or two or more layers of various types of films may be performed after the above second cooling process. Examples of the treatment include a chromate treatment, a phosphate treatment, a chromate-free treatment, an organic resin film formation treatment, and so on.

Examples of the chromate treatment include an electrolytic chromate treatment for forming a chromate film by electrolysis, a reactive chromate treatment for forming a film using a reaction with a material and then washing off excessive treatment solution, and a coating-type chromate treatment for forming a film by applying a treatment solution and drying it without water washing, and so on, and any of the chromate treatments may be employed.

Examples of the electrolytic chromate treatment include electrolytic chromate treatments using, for example, chromic acid, silica sol, resins (phosphoric acid resin, acrylic resin, vinyl ester resin, vinyl acetate acrylic emulsion, carboxylated styrene butadiene latex, diisopropanolamine-modified epoxy resin, and the like), and hard silica.

Examples of the phosphate treatment include a zinc phosphate treatment, a calcium zinc phosphate treatment, a manganese phosphate treatment, and so on.

The chromate-free treatment is particularly suitable because it does not place a burden on the environment. Examples of the chromate-free treatment include an electrolytic chromate-free treatment for forming a chromate-free film by electrolysis, a reactive chromate-free treatment for forming a film using a reaction with a raw material and then washing off excessive treatment solution, a coating-type chromate-free treatment for forming a film by applying a treatment solution and drying it without water washing, and so on, and any of the chromate-free treatments may be employed.

Further, the organic resin to be used in the organic resin film formation treatment is not limited to a specific resin and, for example, various resins such as polyester resin, polyurethane resin, epoxy resin, acrylic resin, polyolefin resin, and modified versions of these resins can be used. The modified versions here refer to resins in which reactive functional groups contained in structures of these resins are reacted with other compounds (for example, monomers, crosslinking agents, or the like) containing, in the structures, functional groups which can react with the functional groups.

As the organic resin, one of the above-mentioned organic resins may be used alone, or a mixture of two or more organic resins (not modified) may be used. Further, one or more organic resins obtained by modifying at least one other organic resin in the presence of at least one organic resin may be used by mixture. In addition, an organic resin that has been made aqueous by dissolving or dispersing it in water may be used. Furthermore, various kinds of coloring pigments and rust preventive pigments may be contained in the organic resin films.

### [EXAMPLES]

Hereinafter, the plated steel sheet according to the present invention will be concretely explained while illustrating examples and comparative examples. Note that the examples illustrated below are only examples of the plated steel sheet according to the present invention, and the plated steel sheet according to the present invention is not limited to the examples illustrated below.

In the following examples and comparative examples, as the steel sheet being the base material, three types of steel sheets for use as the automobile undercarriage parts were used. The three types of steel sheets are any of a steel sheet having a composition of mild steel with a tensile strength of 440 MPa class, a steel sheet having a composition of a high tensile strength sheet with a tensile strength of 780 MPa class, and a steel sheet having a composition of a high tensile strength sheet with a tensile strength of 980 MPa class (all manufactured by NIPPON STEEL CORPORATION). The sheet thickness of each of the hot-rolled steel sheets was set to 3.2 mm. Using the above hot-rolled steel sheets, a plurality of test pieces were produced for each of the hot-rolled steel sheets.

For the prepared test pieces, the strain was applied to the surfaces of the test pieces using the following two kinds of heavy duty grinding brushes. Note that when grinding, 1.0 to 5.0% NaOH aqueous solution was applied in advance to the surfaces of the steel sheets. By appropriately adjusting a brush rotation speed in a range of 100 to 1000 rpm with a brush pressure drop in a range of 0.5 to 10.0 mm, the strain amount to be applied to the surface was controlled. Note that a brush kind A of the two kinds of heavy duty grinding brushes illustrated below is a brush with a stronger grinding force. Note that test pieces on which the heavy duty grinding was not applied were also prepared for comparison.
Brush kind A: D-100 manufactured by HOTANI Co., Ltd.
Brush kind B: M-33 manufactured by HOTANI Co., Ltd.

Plating baths to realize plating layers with compositions as listed in Table 1 below were each prepared, and each plating bath was installed in a batch-type hot-dip plating test apparatus manufactured in-house and performed plating on the above test pieces. Here, the temperature of each test piece was measured using a thermocouple spot-welded to the center of the test piece. Further, for the test piece to be immersed in the plating bath, a heat-reduction treatment was performed on the surface of a plated substrate at 840°C in a N₂-4% H₂ gas atmosphere in a furnace with an oxygen concentration of 20 ppm or less before immersion in the plating bath. After the heat-reduction treatment, the test piece was air-cooled with a N₂ gas and immersed in the plating bath of the hot-dip plating test apparatus for about 3 seconds after the temperature of the test piece reached the bath temperature + 20°C.

In the heat reduction treatment, the dew point in the N₂-4% H₂ atmosphere gas was set to 0°C and decarburization was performed. Further, for comparison, the dew point in the N₂-4% H₂ atmosphere gas was set to -40°C and a test piece not subjected to the decarburization was also prepared. In the test piece subjected to the decarburization, the depth at which the C concentration was 0.05% or less by mass% was 10 µm or more in the measured result by the GDS in the depth direction of the plated steel sheet 1 manufactured. In the test piece not subjected to the decarburization, the depth at which the C concentration was 0.05% or less by mass% was 0 µm, namely, the C concentration at the surface of the test piece was more than 0.05%. The depth at which the C concentration is 0.05% or less by mass% (C 0.05% or less depth) in each test piece is listed in Table 1 below.

After the immersion in the plating bath, the test piece was pulled up at a pulling-up speed of 20 to 200 mm/sec. At the time of pulling-up, control was performed using a N₂ wiping gas so as to obtain a desired plating deposition amount. In the following examples and comparative examples, the plating deposition amount was controlled so that the deposition amount of the plating layer after drying per one side of each test piece was 40 to 120 g/m². After pulling up the test piece from the plating bath, the test piece was cooled from the plating bath temperature to room temperature under the conditions listed in Table 1 below. In the following examples and comparative examples, the second cooling process was started immediately after the end of the first cooling process (namely, the interval between the end of the first cooling process and the start of the second cooling process was set to 0.2 seconds or less). A switching temperature relating to switching between the first cooling process and the second cooling process was set to a theoretical temperature in each of the examples and comparative examples excluding comparative examples 31 and 32. Further, a temperature different from the theoretical temperature was set in comparative examples 31 and 32.

Here, a plated steel sheet having a size of 30 mm × 30 mm was cut out from each test piece plated as explained above, the plated steel sheet was immersed in a 10% HCl aqueous solution with an inhibitor added so that the plating layer was pickled and peeled off, and then the composition of the plating layer was measured by ICP analysis of elements dissolved into the aqueous solution.

Further, for each obtained plating layer, the peak intensity ratio I₁₀₀/I₀₀₂ was calculated by the XRD measurement according to the above method.

### <Evaluation of the paint film blistering during welding>

From each obtained test piece, a steel sheet cut out into a size of 150 mm × 50 mm was regarded as a first steel sheet, and a steel sheet cut out into a size of 150 mm × 30 mm was regarded as a second steel sheet. These steel sheets were overlapped at their long sides and welded by arc welding or laser welding (lap fillet welding).

Here, welding conditions in the arc welding are as follows.
Welding current: 250 A, welding voltage: 26.4 V, welding speed: 100 cm/min
Welding gas: 20% CO₂ + Ar, gas flow rate: 20 L/min
Welding wire: YGW16 manufactured by Nippon Steel Welding & Engineering Co., Ltd., φ1.2 mm
(C: 0.1 mass%, Si: 0.80 mass%, Mn: 1.5 mass%, P: 0.015 mass%, S: 0.008 mass%, Cu: 0.36 mass%)
Inclination angle of welding torch: 45°
Overlap allowance: 10 mm
Steel sheet size: upper sheet side (first steel sheet) 150 × 50 mm, lower sheet side (second steel sheet) 150 × 30 mm
Gap between steel sheets: 0 mm

Further, welding conditions in the laser welding are as follows.
Output: 7 kW, welding speed: 400 cm/min, forward/backward angle: 0°
Steel sheet size: upper sheet side (first steel sheet) 150 × 50 mm, lower sheet side (second steel sheet) 150 × 30 mm
Overlap allowance: 50 mm
Gap between steel sheets: 0 mm

The welded joint obtained as above was subjected to an automobile phosphoric acid conversion treatment (Zn phosphoric acid treatment, SD5350 system: Nipponpaint Industrial Coatings Co., LTD. standard), and to electrodeposition coating (PN110 Power Nix Gray: Nipponpaint Industrial Coatings Co., LTD. standard). In this event, the electrodeposition film thickness was set to 20 µm. The sample after the electrodeposition coating was subjected to a combined cyclic corrosion test (240 cycles) according to JASO (M609-91), and the paint film blistering width at the bead toe portion was evaluated. The evaluation criteria are as follows.

### <<Evaluation Criteria>>

Grade "AAA": paint film blistering width of 1.8 mm or less
"AA": paint film blistering width of more than 1.8 mm and 3.0 mm or less
"A": paint film blistering width of more than 3.0 mm and 4.0 mm or less
"B": paint film blistering width of more than 5.0 mm

Note that the above "toe" is a position specified in JIS Z3001 (2018) and corresponds to a point where the surface of the base material and a surface of a weld bead intersect. In this example, a point where the surface of the plating layer on the plated steel sheet and the surface of the weld bead portion intersect corresponds to this "toe".

Further, when the above paint film blistering width is 4.0 mm or less, the test piece to be focused on can be evaluated to have excellent post-paint corrosion resistance.

### <Evaluation of LME resistance>

The LME resistance of each obtained test piece was evaluated by a hot tensile test. More precisely, both the obtained test piece and an unplated steel sheet were increased in temperature up to 900°C at a temperature increasing rate of 100 °C/sec, held at 900°C for 1 second, then cooled down to 750°C, and subjected to the tensile test at a stroke speed of 10 mm/sec at 750°C. Stress-stroke curves were thus obtained for both the unplated steel sheet and the test piece. A stress × stroke value (area of the stress-stroke curve) was then calculated from each obtained stress-stroke curve, and an evaluation value (%) = {(stress × stroke value of test piece)/(stress × stroke value of unplated steel sheet) × 100} was evaluated based on the following evaluation criteria.

### <<Evaluation Criteria>>

Grade "AA": evaluation value of 95% or more
"A": evaluation value of 85% or more and less than 95%
"B": evaluation value of less than 85%

The obtained results are collectively listed in Table 1 below.

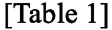

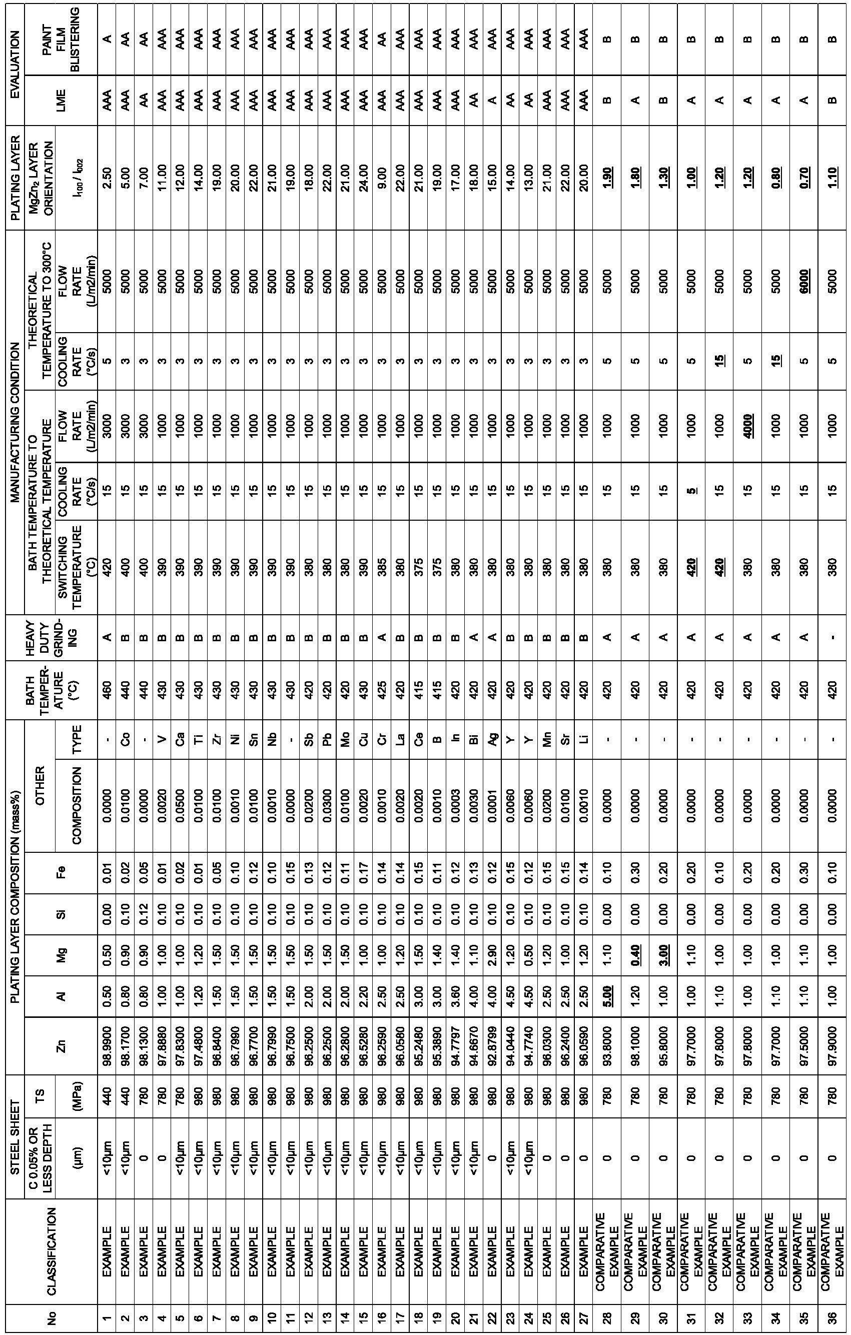

As is clear from Table 1 above, the LME and the paint film blistering can be suppressed in examples corresponding to the examples of the present invention, whereas sufficient performance cannot be exhibited in at least any of the LME and the paint film blistering in examples corresponding to the comparative examples of the present invention.

For example, No. 28 in which the Al content of the plating layer was outside the range of the present invention was excessive in Al content so that the alloying reaction between Zn in the plating layer and the base steel during welding was inhibited and the liquid phase Zn-Mg came into contact with the base steel, thus failing to suppress the LME. Further, because the Al content was excessive, the α primary crystal crystallized out in the plating layer at the non-heat affected portion to inhibit the columnar orientation of the MgZn₂ phase, thus failing to suppress the paint film blistering.

No. 29 in which the Mg content of the plating layer was outside the range of the present invention was insufficient in Mg content and thus insufficient in corrosion resistance of the plating layer so that the columnar orientation of the MgZn₂ phase was not sufficient, thus failing to suppress the paint film blistering.

No. 30 in which the Mg content of the plating layer was outside the range of the present invention was excessive in Mg content so that the alloying reaction between Zn in the plating layer and the base steel during welding was inhibited and the liquid phase Zn-Mg came into contact with base steel, thus failing to suppress the LME. Further, because the Mg content was excessive and the nucleation sites for the MgZn₂ phase in the plating layer excessively increased so that the columnar orientation of the MgZn₂ phase was not sufficient, thus failing to suppress the paint film blistering.

Besides, No. 31 in which the switching temperature was a temperature different from the theoretical temperature in the manufacturing conditions of the plated steel sheet and the cooling rate in the first cooling process was outside the range of the manufacturing conditions in this disclosure was insufficient in the columnar orientation of the MgZn₂ phase so that the combustion of the plating layer could not be suppressed during welding, thus failing to suppress the paint film blistering.

No. 32 in which the switching temperature was a temperature different from the theoretical temperature and the cooling rate in the second cooling process was outside the range of the manufacturing conditions in this disclosure was insufficient in the columnar orientation of the MgZn₂ phase so that the combustion of the plating layer could not be suppressed during welding, thus failing to suppress the paint film blistering.

No. 33 in which the flow rate of the coolant in the first cooling process was outside the range of the manufacturing conditions in this disclosure was insufficient in the columnar orientation of the MgZn₂ phase so that the combustion of the plating layer could not be suppressed during welding, thus failing to suppress the paint film blistering.

No. 34 in which the cooling rate in the second cooling process was outside the range of the manufacturing conditions in this disclosure was insufficient in the columnar orientation of the MgZn₂ phase so that the combustion of the plating layer could not be suppressed during welding, thus failing to suppress the paint film blistering.

No. 35 in which the flow rate of the coolant in the second cooling process was outside the range of the manufacturing conditions in this disclosure was insufficient in the columnar orientation of the MgZn₂ phase so that the combustion of the plating layer could not be suppressed during welding, thus failing to suppress the paint film blistering.

No. 36 in which the heavy duty grinding in this disclosure was not performed was insufficient in the columnar orientation of the MgZn₂ phase because the alloying behavior in the plating layer could not be controlled and an η phase was formed so that the combustion of the plating layer could not be suppressed during welding, thus failing to suppress the paint film blistering.

Preferred embodiments of the present invention have been explained above in detail with reference to the attached drawings, but the present invention is not limited to the embodiments. It should be understood that various changes and modifications are readily apparent to those skilled in the art who have the common general knowledge in the technical field to which the present invention pertains, within the scope of the technical spirit as set forth in claims, and they should also be covered by the technical scope of the present invention.

The embodiments disclosed herein are examples in all respects and should not be considered to be restrictive. Various omissions, substitutions, and changes may be made in the embodiments without departing from the scope of the attached claims, and the configuration and the spirit belonging to the technical field of the present invention as will be described. For example, configuration requirements of the above embodiments can be arbitrarily combined as long as the effects thereof are not impaired. From an arbitrary combination, the operations and effects about the configuration requirements relating to the combination can be obtained as a matter of course, and other operations and other effects apparent to those skilled in the art are obtained from the description herein.

Besides, the effects explained herein are merely explanatory or illustrative in all respects and not restrictive. In other words, the technique relating to the present invention can offer other clear effects to those skilled in the art from the description herein in addition to or in place of the above effects.

Note that the following configurations also belong to the technical scope of the present invention.
(1) A plated steel sheet including
   on at least a part of a surface of a steel sheet, a plating layer having a chemical composition containing, by mass%,
   Al: 0.50 to 4.50 or less,
   Mg: 0.50 to less than 3.00%,
   Fe: 0.01 to 15.00%, and
   selectively containing one or more selected from the group consisting of following element group A, element group B, element group C, element group D, element group E, element group F, and element group G with a balance composed of 5.0000 mass% or more of Zn and impurities, wherein
   in a measured result obtained by measuring the plating layer by an X-ray diffraction method, a peak intensity ratio I₁₀₀/I₀₀₂ of an intensity I₁₀₀ of a peak corresponding to a (100) plane of a MgZn₂ phase to an intensity I₀₀₂ of a peak corresponding to a (002) plane is 2.50 or more.

   [Element group A]: one or two selected from the group consisting of Si: more than 0% and 2.00% or less and Ca: more than 0% and 2.00% or less
   [Element group B]: one or more selected from the group consisting of Sb: more than 0% and 0.5000% or less, Pb: more than 0% and 0.5000% or less, and Sr: more than 0% and 0.5000% or less
   [Element group C]: one or more selected from the group consisting of Co: more than 0% and 1.0000% or less, V: more than 0% and 1.0000% or less, Cu: more than 0% and 1.0000% or less, Ti: more than 0% and 1.0000% or less, Cr: more than 0% and 1.0000% or less, Nb: more than 0% and 1.0000% or less, Ni: more than 0% and 1.0000% or less, Mn: more than 0% and 1.0000% or less, and Mo: more than 0% and 1.0000% or less
   [Element group D]: one or more selected from the group consisting of In: more than 0% and 1.0000% or less, Bi: more than 0% and 1.0000% or less, and Sn: more than 0% and 1.0000% or less
   [Element group E]: one or more selected from the group consisting of Zr: more than 0% and 1.0000% or less, Ag: more than 0% and 1.0000% or less, and Li: more than 0% and 1.0000% or less
   [Element group F]: one or more selected from the group consisting of La: more than 0% and 0.5000% or less, Ce: more than 0% and 0.5000% or less, and Y: more than 0% and 0.5000% or less
   [Element group G]: B: more than 0% and 0.5000% or less
(2) The plated steel sheet according to the (1) having a chemical composition containing the element group A.
(3) The plated steel sheet according to the (1) or (2) having a chemical composition containing the element group B.
(4) The plated steel sheet according to any one of the (1) to (3) having a chemical composition containing the element group C.
(5) The plated steel sheet according to any one of the (1) to (4) having a chemical composition containing the element group D.
(6) The plated steel sheet according to any one of the (1) to (5) having a chemical composition containing the element group E.
(7) The plated steel sheet according to any one of the (1) to (6) having a chemical composition containing the element group F.
(8) The plated steel sheet according to any one of the (1) to (7) having a chemical composition containing the element group G.
(9) The plated steel sheet according to any one of the (1) to (8), wherein
   the steel sheet has a tensile strength of 780 MPa class or higher.
(10) The plated steel sheet according to any one of the (1) to (9), wherein
   the peak intensity ratio I₁₀₀/I₀₀₂ is 5.00 or more.
(11) The plated steel sheet according to the (10), wherein
   the peak intensity ratio I₁₀₀/I₀₀₂ is 10.00 or more.
(12) The plated steel sheet according to any one of the (1) to (11), wherein
   in a measured result obtained by measurement by glow discharge spectrometry in a depth direction of the plated steel sheet, a depth at which a C concentration is 0.05% or less by mass% is 10 µm or more.

### [Explanation of Codes]

- 1: plated steel sheet
- 10: steel sheet
- 20: plating layer

## Claims

1. A plated steel sheet comprising
on at least a part of a surface of a steel sheet, a plating layer having a chemical composition containing, by mass%,
Al: 0.50 to 4.50 or less,
Mg: 0.50 to less than 3.00%,
Fe: 0.01 to 15.00%, and
selectively containing one or more selected from the group consisting of following element group A, element group B, element group C, element group D, element group E, element group F, and element group G with a balance composed of 5.0000 mass% or more of Zn and impurities, wherein
in a measured result obtained by measuring the plating layer by an X-ray diffraction method, a peak intensity ratio I₁₀₀/I₀₀₂ of an intensity I₁₀₀ of a peak corresponding to a (100) plane of a MgZn₂ phase to an intensity I₀₀₂ of a peak corresponding to a (002) plane is 2.50 or more.
[Element group A]: one or two selected from the group consisting of Si: more than 0% and 2.00% or less and Ca: more than 0% and 2.00% or less
[Element group B]: one or more selected from the group consisting of Sb: more than 0% and 0.5000% or less, Pb: more than 0% and 0.5000% or less, and Sr: more than 0% and 0.5000% or less
[Element group C]: one or more selected from the group consisting of Co: more than 0% and 1.0000% or less, V: more than 0% and 1.0000% or less, Cu: more than 0% and 1.0000% or less, Ti: more than 0% and 1.0000% or less, Cr: more than 0% and 1.0000% or less, Nb: more than 0% and 1.0000% or less, Ni: more than 0% and 1.0000% or less, Mn: more than 0% and 1.0000% or less, and Mo: more than 0% and 1.0000% or less
[Element group D]: one or more selected from the group consisting of In: more than 0% and 1.0000% or less, Bi: more than 0% and 1.0000% or less, and Sn: more than 0% and 1.0000% or less
[Element group E]: one or more selected from the group consisting of Zr: more than 0% and 1.0000% or less, Ag: more than 0% and 1.0000% or less, and Li: more than 0% and 1.0000% or less
[Element group F]: one or more selected from the group consisting of La: more than 0% and 0.5000% or less, Ce: more than 0% and 0.5000% or less, and Y: more than 0% and 0.5000% or less
[Element group G]: B: more than 0% and 0.5000% or less

2. The plated steel sheet according to claim 1 having a chemical composition containing the element group A.

3. The plated steel sheet according to claim 1 having a chemical composition containing the element group B.

4. The plated steel sheet according to claim 1 having a chemical composition containing the element group C.

5. The plated steel sheet according to claim 1 having a chemical composition containing the element group D.

6. The plated steel sheet according to claim 1 having a chemical composition containing the element group E.

7. The plated steel sheet according to claim 1 having a chemical composition containing the element group F.

8. The plated steel sheet according to claim 1 having a chemical composition containing the element group G.

9. The plated steel sheet according to any one of claims 1 to 8, wherein
the steel sheet has a tensile strength of 780 MPa class or higher.

10. The plated steel sheet according to any one of claims 1 to 8, wherein
the peak intensity ratio I₁₀₀/I₀₀₂ is 5.00 or more.

11. The plated steel sheet according to claim 9, wherein
the peak intensity ratio I₁₀₀/I₀₀₂ is 5.00 or more.

12. The plated steel sheet according to claim 10, wherein
the peak intensity ratio I₁₀₀/I₀₀₂ is 10.00 or more.

13. The plated steel sheet according to claim 11, wherein
the peak intensity ratio I₁₀₀/I₀₀₂ is 10.00 or more.

14. The plated steel sheet according to any one of claims 1 to 8, wherein
in a measured result obtained by measurement by glow discharge spectrometry in a depth direction of the plated steel sheet, a depth at which a C concentration is 0.05% or less by mass% is 10 µm or more.

15. The plated steel sheet according to claim 9, wherein
in a measured result obtained by measurement by glow discharge spectrometry in a depth direction of the plated steel sheet, a depth at which a C concentration is 0.05% or less by mass% is 10 µm or more.

16. The plated steel sheet according to claim 10, wherein
in a measured result obtained by measurement by glow discharge spectrometry in a depth direction of the plated steel sheet, a depth at which a C concentration is 0.05% or less by mass% is 10 µm or more.

17. The plated steel sheet according to claim 11, wherein
in a measured result obtained by measurement by glow discharge spectrometry in a depth direction of the plated steel sheet, a depth at which a C concentration is 0.05% or less by mass% is 10 µm or more.

18. The plated steel sheet according to claim 12, wherein
in a measured result obtained by measurement by glow discharge spectrometry in a depth direction of the plated steel sheet, a depth at which a C concentration is 0.05% or less by mass% is 10 µm or more.

19. The plated steel sheet according to claim 13, wherein
in a measured result obtained by measurement by glow discharge spectrometry in a depth direction of the plated steel sheet, a depth at which a C concentration is 0.05% or less by mass% is 10 µm or more.
